# FASCICULE DE BREVET EUROPEEN

(11) **EP 3 637 063 B1**
(45) Date de publication et mention de la délivrance du brevet: **03.05.2023**
(21) Numéro de dépôt: 19200935.5
(22) Date de dépôt: 16.02.2010
(51) Int. Cl.: G01F 1/66, G01F 15/18

(54) **COMPTEUR A CELLULE DE MESURE A ULTRASONS DE TYPE CAPSULE, STANDARDISÉE**
ZÄHLER MIT NORMIERTER ULTRASCHALL-MESSZELLE VOM KAPSELTYP
STANDARDISED CAPSULE-TYPE METER WITH AN ULTRASOUND MEASUREMENT CELL

(43) Date de publication de la demande: 15.04.2020
(62) Demande divisionnaire de: 10305159.5
(73) Titulaire: Itron Global SARL, Liberty Lake, WA 99019 (US)
(72) Inventeur: Hyvernat, Stéphane, 71570 LA CHAPELLE DE GUINCHAY (FR); Bouzid, Tarek, 71000 MACON (FR); Caciu, Costin, 71000 MACON (FR)
(74) Mandataire: Jarrett, Daniel Phillip

(56) Documents cités:
- EP-A2- 1 227 303
- WO-A1-2008/107375
- DE-A1-102005 062 629
- JP-A- 2005 189 090
- Ptb: "EWG-Bauartzulassung vom 15.12.1992 3. Neufassung der Anlage" In: "EWG-Bauartzulassung vom 15.12.1992 3. Neufassung der Anlage", 15 décembre 1992 (1992-12-15), Physikalisch-Technische Bundesanstalt, XP055670103, pages 1-94, * le document en entier *

## Description

L'invention concerne un compteur à cellule de mesure à ultra son de type capsule.

Elle se rapporte plus précisément à un compteur de fluide, en particulier d'eau, comportant une cellule de mesure à ultra sons, de type capsule, comportant un canal de mesure équipé de capteurs d'ultra sons et montée sur une bâche comportant une conduite d'entrée et une conduite de sortie, ladite conduite d'entrée communiquant avec l'entrée du canal de mesure et ladite conduite de sortie communiquant avec la sortie du canal de mesure.

JP 2005 189090 décrit un compteur d'eau à ultrasons pour réduire l'espace pour être attaché à une conduite d'eau tout en assurant la distance de propagation des ondes ultrasonores.

DE 10 2005 062629 décrit un débitmètre, en particulier une capsule de mesure, comprenant une antichambre disposée à l'intérieur d'un boîtier pour introduire un fluide dans une zone de mesure.

"EWG-Bauartzulassung vom 15.12.1992" est un certificat d'homologation de type CEE pour un compteur à turbine multi-jets pour eau chaude.

Dans ce qui précède et dans ce qui suit, une cellule de mesure de type capsule signifie une cellule de mesure amovible qui peut être montée sur une bâche et démontée d'une bâche, sans intervenir sur l'installation de cette dernière, c'est-à-dire sans nécessité de démontage et remontage de la bâche.

Il existe deux types de bâches. Le premier type de bâche est de type coaxial, c'est-à-dire que la conduite de sortie présente un coude de façon à déboucher de façon centrée sur l'axe central de la bâche et la conduite d'entrée débouche par un orifice sur un volume annulaire coaxial. Le second type de bâche de type aligné comporte une conduite d'entrée et une conduite de sortie rectilignes et alignées débouchant directement dans l'intérieur de la bâche.

Un tel compteur est décrit dans le document de brevet WO 2008/107375 qui décrit un compteur à cellule de mesure à ultra son de type capsule, comportant une cellule de mesure standardisée qui puisse être installée sur une bâche du premier type ou du second type.

Selon ce document, le procédé de montage d'une cellule de mesure à ultra sons, de type capsule, consiste à utiliser une pièce d'adaptation supplémentaire, spécifique au type de bâche et raccordant la conduite d'entrée avec l'entrée du canal de mesure et la conduite de sortie avec la sortie du canal de mesure.

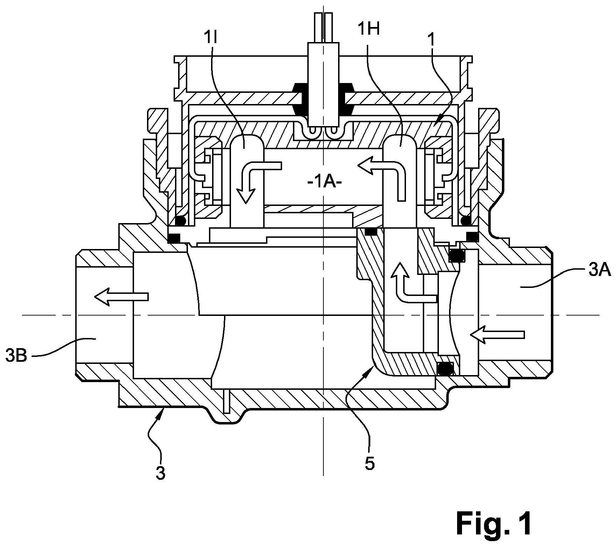

Selon un second mode de réalisation destiné à une bâche de type aligné, tel qu'illustré sur la figure 1, la pièce d'adaptation consiste en une pièce tubulaire coudée 5 destinée à être montée sur l'embouchure de la conduite d'entrée 3A et à être reliée de façon étanche à la cellule de mesure 1.

La figure 1 illustre par des flèches, l'écoulement du fluide. Ce dernier arrive par la conduite d'entrée 3A de la bâche, à l'intérieur de la pièce d'adaptation 5. Il parcourt ensuite un canal d'admission 1H pour atteindre le canal de mesure 1A d'où il s'évacue par un canal de refoulement 1I jusqu'à l'intérieur de la bâche 3, d'où il s'écoule dans la conduite de sortie 3B de la bâche.

Il s'avère que ce mode de réalisation pose le problème technique suivant.

En sortie du canal de refoulement 1I en aval du canal de mesure, le fluide s'écoule dans l'espace interne de la bâche non occupé par la pièce d'adaptation 5. Cet espace est de grand volume et l'évasement brusque de la veine de fluide entraîne la création de pertes de charge très importantes. Ces pertes de charge constituent un inconvénient majeur compliquant la conception et la mise au point du compteur, puisque ces pertes de charge contribuent à la perte de charge globale du compteur qui ne doit pas dépasser, au débit nominal, une valeur normalisée.

Pour résoudre ce problème, l'invention propose une pièce d'adaptation pour le montage d'une cellule de mesure à ultra sons, de type capsule, comportant un canal de mesure équipé de capteurs d'ultra sons et destinée à être montée sur une bâche comportant une conduite d'entrée et une conduite de sortie de type aligné, dont la conduite d'entrée et la conduite de sortie rectilignes et alignées débouchent directement dans l'intérieur de la bâche, cette pièce d'adaptation supplémentaire raccordant ladite conduite d'entrée avec l'entrée du dit canal de mesure et ladite conduite de sortie avec la sortie du dit canal de mesure et comportant un canal tubulaire coudé destiné à être raccordé à l'embouchure de l'une desdites conduites, pièce caractérisée en ce qu'elle comporte un second canal tubulaire coudé destiné à être raccordé à l'embouchure de l'autre desdites conduites.

Selon un mode de réalisation préféré, lesdits canaux coudés sont des canaux courbes de forme parfaitement progressive, avec à une de leurs extrémités une section circulaire correspondante à et proche de la section des conduites d'entrée et de sortie de la bâche et à l'autre de leurs extrémités une section oblongue correspondante à et proche de la section des ouïes d'entrée et de sortie de la cellule de mesure, cette section circulaire étant supérieure à cette section oblongue.

Ainsi, le changement de direction de la veine de fluide, en particulier d'eau, dans la pièce d'adaptation, ne se fait pas de façon brusque comme décrit dans le document WO 2008/107375. Il en résulte que, selon l'invention, les pertes de charge sont réduites.

De préférence, cette pièce est constituée d'une seule pièce percée desdits deux canaux coudés.

Avantageusement, les bords desdits canaux coudés présentent une dépouille circulaire.

Ces canaux peuvent ainsi être réalisés lors du moulage par des noyaux rotatifs, ce qui permet leur moulage en une seule opération, sans faire appel à la technologie de moule à noyau perdu.

De préférence, cette pièce comporte un joint torique disposé dans une rainure entourant la sortie ou l'entrée d'un desdits canaux coudés de la pièce d'adaptation et un joint torique disposé dans une rainure entourant l'entrée ou la sortie de ce même canal de la pièce d'adaptation.

La pièce d'adaptation peut comporter un agencement d'encliquetage destiné à coopérer avec des moyens correspondants portés par la cellule de mesure.

Elle peut également comporter au moins un pion de positionnement destiné à être inséré dans un orifice prévu dans la cellule de mesure.

L'invention concerne également un ensemble dit capsule constitué d'une cellule de mesure et d'une pièce d'adaptation telle que précisée ci-dessus, assemblées.

L'invention est décrite ci-après plus en détail à l'aide de figures illustrant uniquement un mode de réalisation préféré de l'invention.
La figure 1 déjà évoquée représente en coupe verticale un compteur selon l'art antérieur.
La figure 2 est une vue en perspective éclatée et en coupe verticale d'un compteur selon l'invention.
La figure 3 est une vue en perspective en coupe verticale d'un compteur selon l'invention.
La figure 4 est une vue partielle en coupe verticale d'un compteur selon l'invention.
La figure 5 est une vue partielle en perspective du volume occupé par le fluide dans un des canaux coudés d'un compteur selon l'invention.
La figure 6 est une vue de détail en coupe verticale d'un des canaux coudés d'un compteur selon l'invention.

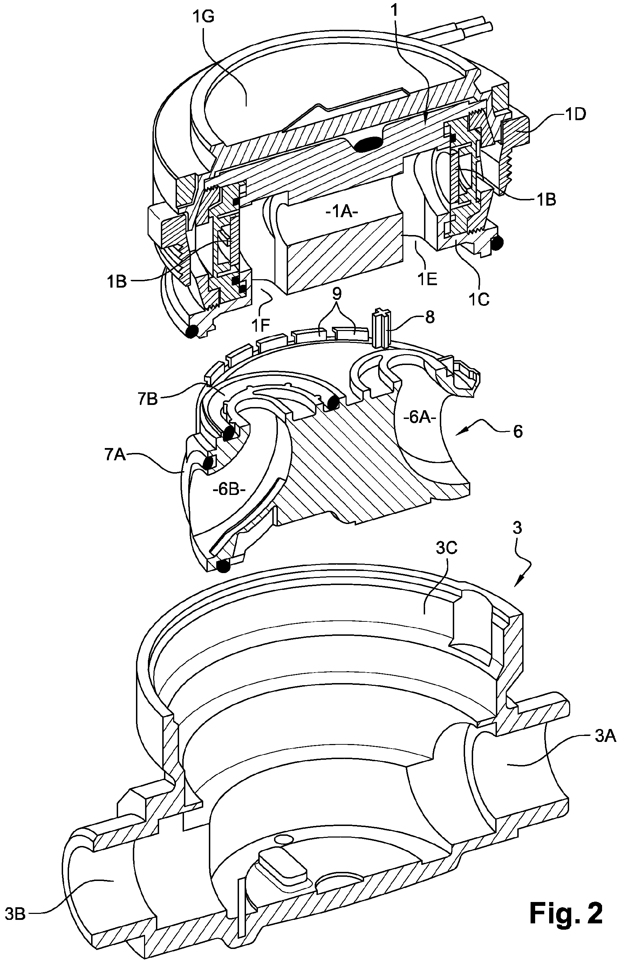

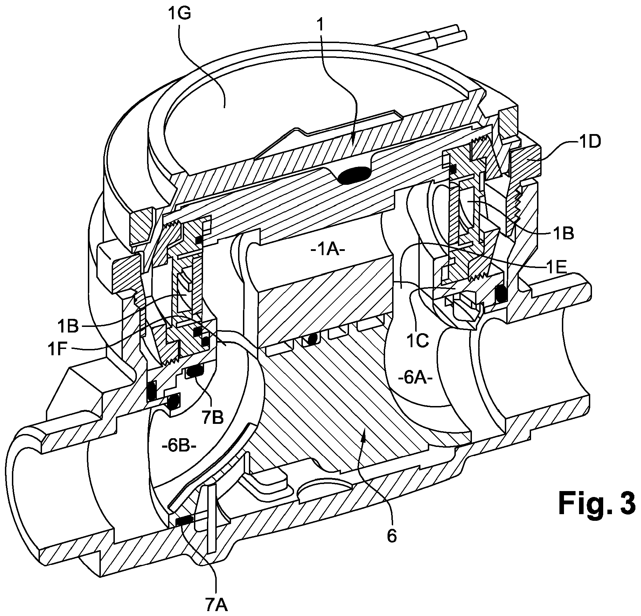

Comme représenté sur les figures 2 à 4, la cellule de mesure à ultra sons 1 comporte un canal de mesure 1A équipé d'un capteur ultra sons 1B émetteur et récepteur à chacune de ses extrémités.

Elle comporte un plateau 1C portant le canal de mesure et une bague de serrage 1D, ce plateau comportant une ouïe d'entrée 1E et une ouïe de sortie 1F, la pièce d'adaptation 6 étant destinée à être connectée de façon étanche à ces ouïes. Un capot 1G de protection est disposé en partie supérieure.

La conduite d'entrée de la bâche 3A est destinée à communiquer avec l'entrée du canal de mesure correspondant à l'ouïe d'entrée 1E et la conduite de sortie de la bâche 3B est destinée à communiquer avec la sortie du canal de mesure correspondant à l'ouïe de sortie 1F. La pièce d'adaptation 6 disposée au niveau de la bâche est raccordée aux conduites de la bâche, cette pièce d'adaptation assurant un écoulement de fluide dans le canal de mesure 1A de la cellule de mesure.

La pièce d'adaptation 6 comporte un premier canal 6A tubulaire coudé à 90° destinée à être montée sur l'embouchure de la conduite d'entrée 3A de la bâche et à être reliée de façon étanche à l'ouïe d'entrée 1E du plateau 1C de la cellule de mesure.

Selon l'invention, elle comporte également un second canal 6B tubulaire coudé à 90° destiné à être raccordé à l'embouchure de la conduite de sortie 3B de la bâche et à être reliée de façon étanche à l'ouïe de sortie 1F du plateau 1C de la cellule de mesure.

La pièce d'adaptation 6 est donc d'une seule pièce adaptée à la forme et la dimension de la bâche, percée de ces canaux.

Elle est équipée de joints d'étanchéité assurant l'étanchéité aux interfaces entre bâche 3, pièce d'adaptation 6 et cellule de mesure 1.

Un joint torique 7A est disposé dans une rainure entourant la sortie du second canal coudé 6B de la pièce d'adaptation. Il est destiné à être comprimé contre celle-ci et la bâche autour de la conduite de sortie 3B de cette dernière.

Un joint torique 7B est disposé dans une rainure entourant l'entrée du second canal coudé 6B de la pièce d'adaptation. Il est destiné à être comprimé contre celle-ci et le plateau 1C autour de l'ouïe de sortie 1F de la cellule de mesure.

En variante, de manière analogue, ces joints peuvent être disposés sur le premier canal coudé 6A, le premier dans une rainure entourant l'entrée du premier canal coudé 6A et le second dans une rainure entourant la sortie du premier canal coudé 6A.

Par ailleurs, la pièce d'adaptation 6 comporte sur sa face supérieure au moins un pion 8 de positionnement, de préférence deux pions, destiné à être inséré dans un orifice correspondant prévu dans le plateau 1C de la cellule de mesure, afin d'assurer un positionnement précis des ouïes 1E et 1F de la cellule de mesure en face des canaux coudés 6A, 6B de la pièce d'adaptation.

A cette liaison en rotation, s'ajoute une liaison en translation grâce à des languettes périphériques 9 portées par la pièce d'adaptation 6 et introduites dans un cran formé dans le plateau 1C de la cellule de mesure, ces languettes assurant également un encliquetage de ces deux éléments.

Pour leur montage, tout d'abord, la cellule de mesure 1 est solidarisée à la pièce d'adaptation 6 par insertion du pion 8 et encliquetage des languettes 9 dans les cavités correspondants de la cellule de mesure. Formant ainsi un sous-ensemble appelé capsule, cellule de mesure 1 et pièce d'adaptation 6 sont fixées à la bâche 3 par vissage de la bague de serrage 1D de la cellule de mesure sur le filetage intérieur 3C porté par la bâche. Ce vissage assure le serrage de la pièce d'adaptation 6 contre la périphérie de l'embouchure des conduites d'entrée et de sortie 3A, 3B de la bâche avec interposition du joint d'étanchéité 7A prévu sur la pièce d'adaptation ainsi que le serrage de la pièce d'adaptation 6 contre le plateau 1C de la cellule de mesure avec interposition du joint d'étanchéité 7B prévu sur la pièce d'adaptation.

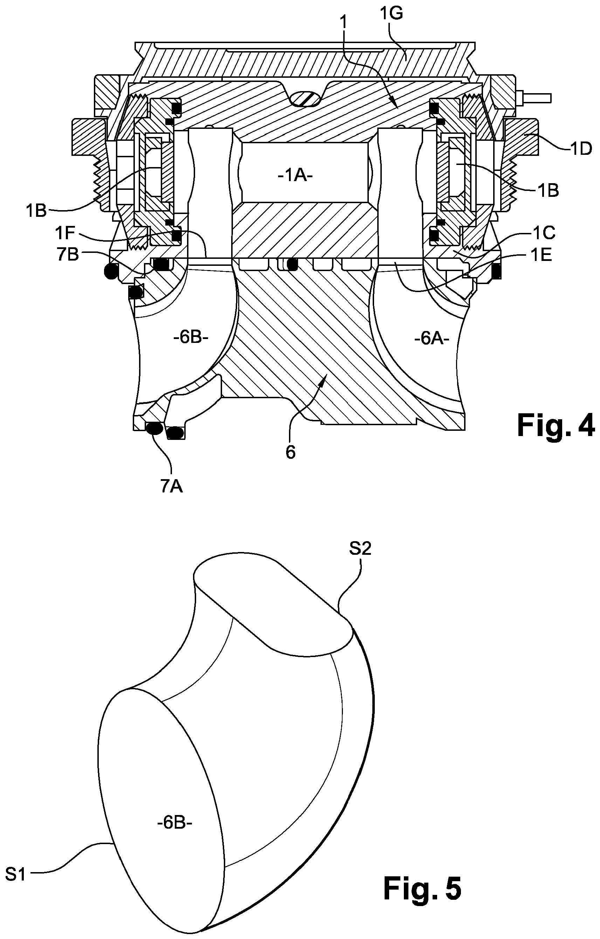

Les canaux coudés 6A, 6B de la pièce d'adaptation sont des canaux courbes de forme parfaitement progressive, comme illustré sur la figure 5, dotés à une de leurs extrémités d'une section circulaire S₁ correspondante à et proche de la section des conduites d'entrée et de sortie 2A, 2B de la bâche et à l'autre de leurs extrémités une section oblongue S₂ correspondante à et proche de la section des ouïes d'entrée et de sortie 1E, 1F de la cellule de mesure, cette section circulaire étant supérieure à cette section oblongue.

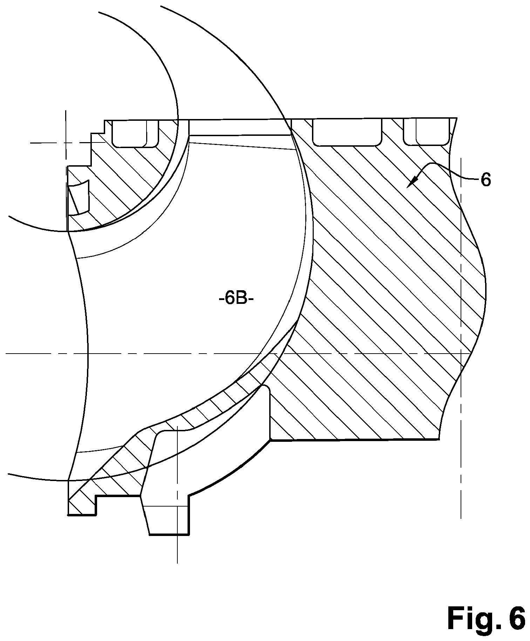

Par ailleurs, leur forme en section longitudinale verticale est représentée sur la figure 6. Leur forme est construite selon les conditions précédemment précisées et leur bord a une forme en section verticale doté d'une dépouille circulaire, afin de pouvoir les fabriquer au moyen de noyaux rotatifs, ce qui permet leur moulage en une seule opération, sans faire appel à la technologie de moule à noyau perdu.

En variante, toujours dans le cadre de l'invention, la pièce d'adaptation 6 peut être constituée de plusieurs parties assemblées par exemple par soudure, les canaux coudés n'étant alors pas forcément dotés d'une dépouille circulaire.

## Revendications

1. Pièce d'adaptation (6) destinée au montage d'une cellule de mesure à ultra sons (1), de type capsule, comportant un canal de mesure (1A) équipé de capteurs d'ultra sons (1B), destinée à être montée sur une bâche (3) comportant une conduite d'entrée (3A) et une conduite de sortie (3B) de type aligné, dont la conduite d'entrée et la conduite de sortie rectilignes et alignées débouchent directement dans l'intérieur de la bâche, cette pièce d'adaptation supplémentaire (6) raccordant ladite conduite d'entrée (3A) avec l'entrée du dit canal de mesure (1A) et ladite conduite de sortie (3B) avec la sortie du dit canal de mesure (1A) et comportant :
un premier canal tubulaire coudé (6A) destiné à être raccordé à l'embouchure de l'une desdites conduites et à l'entrée dudit canal de mesure, et
un second canal tubulaire coudé (6B) destiné à être raccordé à l'embouchure de l'autre desdites conduites et à la sortie dudit canal de mesure.

2. Pièce selon la revendication précédente, dans laquelle lesdits canaux coudés (6A, 6B) sont des canaux courbes, avec à une de leurs extrémités une section circulaire (S₁) correspondante à et proche de la section des conduites d'entrée et de sortie (3A, 3B) de la bâche et à l'autre de leurs extrémités une section oblongue (S₂) correspondante à et proche de la section des ouïes d'entrée et de sortie (1E, 1F) de la cellule de mesure, cette section circulaire étant supérieure à cette section oblongue.

3. Pièce selon l'une des revendications précédentes, constituée d'une seule pièce percée desdits deux canaux coudés (6A, 6B).

4. Pièce selon la revendication précédente, dans laquelle les bords desdits canaux coudés présentent une dépouille circulaire.

5. Pièce selon l'une des revendications précédentes, comportant un joint torique (7A) disposé dans une rainure entourant la sortie d'un desdits canaux coudés (6A, 6B) de la pièce d'adaptation et un joint torique (7B) disposé dans une rainure entourant l'entrée de ce même canal (6A, 6B) de la pièce d'adaptation.

6. Pièce selon l'une des revendications précédentes, comportant un agencement d'encliquetage (9) destiné à coopérer avec des moyens correspondants portés par la cellule de mesure (1).

7. Pièce selon l'une des revendications précédentes, comportant au moins un pion (8) de positionnement destiné à être inséré dans un orifice prévu dans la cellule de mesure (1).

8. Pièce selon l'une des revendications précédentes, dans laquelle ladite cellule de mesure comportant une ouïe d'entrée (1E) et une ouïe de sortie (1F), ladite pièce d'adaptation (6) étant destinée à être connectée de façon étanche à ces ouïes (1E, 1F).

9. Pièce selon la revendication précédente, dans laquelle ledit premier canal tubulaire coudé (6A) est destiné à être monté sur l'embouchure de ladite conduite d'entrée (3A) et à être relié de façon étanche à ladite ouïe d'entrée (1E).

10. Pièce selon l'une des revendications 8 à 9, dans laquelle ledit second canal tubulaire coudé (6B) est destiné à être raccordé à l'embouchure de ladite conduite de sortie (3B) et à être relié de façon étanche à ladite ouïe de sortie (1F).

11. Ensemble dit capsule constitué d'une cellule de mesure à ultrasons (1) et d'une pièce d'adaptation (6) selon l'une des revendications précédentes, assemblées.

12. Ensemble selon la revendication 11, la pièce d'adaptation étant selon l'une des revendications 8 à 10, dans lequel la section de ladite ouïe d'entrée (1E) et la section de ladite conduite de sortie (3B) sont oblongues.

13. Ensemble selon l'une des revendications 11 à 12, dans lequel ladite conduite d'entrée (3A) est raccordée avec l'entrée dudit canal de mesure (1A) via le premier canal tubulaire coudé (6A) et un canal d'admission (1H) disposé à une extrémité dudit canal de mesure (1A) et ladite conduite de sortie (3B) est raccordée avec la sortie dudit canal de mesure (1A) via le second canal tubulaire coudé (6B) et un canal de refoulement (1I) disposé à l'autre extrémité dudit canal de mesure (1A).

14. Ensemble selon l'une des revendications 11 à 13, dans lequel ladite cellule de mesure (1) comporte un capteur d'ultra sons (1B) émetteur et récepteur à chacune des extrémités dudit canal de mesure (1A).

15. Ensemble selon l'une des revendications 11 à 14, dans lequel ledit canal de mesure (1A) est rectiligne.

## Patentansprüche

1. Adapterteil (6) zur Montage einer Ultraschall-Messzelle (1) vom Kapseltyp, umfassend einen mit Ultraschallsensoren (1B) ausgestatteten Messkanal (1A), der zur Montage auf einem Tank (3) vorgesehen ist, umfassend eine Einlassleitung (3A) und eine Auslassleitung (3B) vom ausgerichteten Typ, deren gerade und ausgerichtete Einlassleitung und Auslassleitung direkt in das Innere des Tanks münden, wobei dieses zusätzliche Anpassungsteil (6) die Einlassleitung (3A) mit dem Einlass des Messkanals (1A) und die Auslassleitung (3B) mit dem Auslass des Messkanals (1A) verbindet und umfassend:
einen ersten gebogenen rohrförmigen Kanal (6A), der dazu bestimmt ist, mit der Mündung einer der Leitungen und dem Einlass des Messkanals verbunden zu werden, und
einen zweiten gebogenen rohrförmigen Kanal (6B), der dazu bestimmt ist, mit der Mündung einer der Leitungen und dem Auslass des Messkanals verbunden zu werden.

2. Teil nach dem vorhergehenden Anspruch, wobei die gebogenen Kanäle (6A, 6B) gekrümmte Kanäle sind, die an einem ihrer Enden einen kreisförmigen Abschnitt (S₁) aufweisen, der dem Abschnitt der Ein- und Auslassleitungen (3A, 3B) des Tanks entspricht und nahe daran liegt, und am anderen ihrer Enden einen länglichen Abschnitt (S₂) aufweisen, der dem Abschnitt der Ein- und Auslassschlitze (1E, 1F) der Messzelle entspricht und nahe daran liegt, wobei dieser kreisförmige Abschnitt größer ist als dieser längliche Abschnitt.

3. Teil nach einem der vorhergehenden Ansprüche, das aus einem einzigen Teil besteht, das von den beiden gebogenen Kanälen (6A, 6B) durchbohrt wird.

4. Teil nach dem vorhergehenden Anspruch, bei dem die Ränder der gebogenen Kanäle eine kreisförmige Fase aufweisen.

5. Teil nach einem der vorhergehenden Ansprüche, umfassend einen O-Ring (7A), der in einer Nut angeordnet ist, die den Auslass eines der gebogenen Kanäle (6A, 6B) des Adapterteils umgibt, und einen O-Ring (7B), der in einer Nut angeordnet ist, die den Einlass desselben Kanals (6A, 6B) des Adapterteils umgibt.

6. Teil nach einem der vorhergehenden Ansprüche, umfassend eine Schnappverbindungsanordnung (9), die dazu bestimmt ist, mit entsprechenden Mitteln zusammenzuwirken, die von der Messzelle (1) getragen werden.

7. Teil nach einem der vorhergehenden Ansprüche, umfassend einen Positionierstift (8), der dazu bestimmt ist, in eine in der Messzelle (1) vorgesehene Öffnung eingesetzt zu werden.

8. Teil nach einem der vorhergehenden Ansprüche, wobei die Messzelle einen Einlassschlitz (1E) und einen Auslassschlitz (1F) umfasst, wobei das Adapterteil (6) dazu bestimmt ist, abgedichtet mit diesen Schlitzen (1E, 1F) verbunden zu werden.

9. Teil nach dem vorhergehenden Anspruch, wobei der erste gebogene rohrförmige Kanal (6A) dazu bestimmt ist, an der Mündung der Einlassleitung (3A) befestigt und abgedichtet am Einlassschlitz (1E) angebracht zu werden.

10. Teil nach einem der Ansprüche 8 bis 9, wobei der zweite gebogene rohrförmige Kanal (6B) dazu bestimmt ist, mit der Mündung der Auslassleitung (3B) verbunden und abgedichtet am Auslassschlitz (1F) angebracht zu werden.

11. Eine als Kapsel bezeichnete Anordnung, bestehend aus einer Ultraschall-Messzelle (1) und einem Adapterteil (6) nach einem der vorhergehenden Ansprüche, die angeordnet sind.

12. Anordnung nach Anspruch 11, wobei das Adapterteil nach einem der Ansprüche 8 bis 10 ausgeführt ist, wobei der Abschnitt des Einlassschlitzes (1E) und der Abschnitt des Auslassschlitzes (3B) länglich sind.

13. Anordnung nach einem der Ansprüche 11 bis 12, wobei die Einlassleitung (3A) über den ersten gebogenen rohrförmigen Kanal (6A) und einen an einem Ende des Messkanals (1A) angeordneten Einlasskanal (1H) mit dem Einlass des Messkanals (1A) verbunden ist und die Auslassleitung (3B) über den zweiten gebogenen rohrförmigen Kanal (6B) und einen an dem anderen Ende des Messkanals (1A) angeordneten Austrittskanal (II) mit dem Auslass des Messkanals (1A) verbunden ist.

14. Anordnung nach einem der Ansprüche 11 bis 13, wobei die Messzelle (1) an jedem Ende des Messkanals (1A) einen sendenden und empfangenden Ultraschallsensor (1B) umfasst.

15. Anordnung nach einem der Ansprüche 11 bis 14, wobei der Messkanal (1A) geradlinig ist.

## Claims

1. Adapter (6) for mounting a capsule-type ultrasonic measurement cell (1), having a measurement channel (1A) equipped with ultrasonic sensors (1B), intended to be mounted on a tank (3) having an inlet pipe (3A) and an outlet pipe (3B) of aligned type, wherein the rectilinear and aligned inlet pipe and outlet pipe lead directly into the interior of the tank, this additional adapter (6) connecting said inlet pipe (3A) to the inlet of said measurement channel (1A) and said outlet pipe (3B) to the outlet of said measurement channel (1A), and having:
a first bent tubular channel (6A) intended to be connected to the mouth of one of said pipes and to the inlet of said measurement channel, and
a second bent tubular channel (6B) intended to be connected to the mouth of the other of said pipes and to the outlet of said measurement channel.

2. Adapter according to the preceding claim, wherein said bent channels (6A, 6B) are curved channels with, at one of their ends, a circular section (S₁) corresponding to and close to the section of the inlet and outlet pipes (3A, 3B) of the tank and, at the other of their ends, an oblong section (S₂) corresponding to and close to the section of the inlet and outlet orifices (1E, 1F) of the measurement cell, this circular section being greater than this oblong section.

3. Adapter according to either of the preceding claims, which is made up of a single piece pierced by said two bent channels (6A, 6B).

4. Adapter according to the preceding claim, wherein the edges of said bent channels have a circular clearance.

5. Adapter according to one of the preceding claims, which has an O-ring (7A) disposed in a groove surrounding the outlet of one of said bent channels (6A, 6B) of the adapter and an O-ring (7B) disposed in a groove surrounding the inlet of this same channel (6A, 6B) of the adapter.

6. Adapter according to one of the preceding claims, which has a snap-fastening arrangement (9) intended to cooperate with corresponding means carried by the measurement cell (1).

7. Adapter according to one of the preceding claims, which has at least one positioning pin (8) intended to be inserted into an orifice provided in the measurement cell (1).

8. Adapter according to one of the preceding claims, wherein said measurement cell has an inlet orifice (1E) and an outlet orifice (1F), said adapter (6) being intended to be connected to these orifices (1E, 1F) in a leaktight manner.

9. Adapter according to the preceding claim, wherein said first bent tubular channel (6A) is intended to be mounted on the mouth of said inlet pipe (3A) and to be connected to said inlet orifice (1E) in a leaktight manner.

10. Adapter according to either of Claims 8 and 9, wherein said second bent tubular channel (6B) is intended to be connected to the mouth of said outlet pipe (3B) and to be connected to said outlet orifice (1F) in a leaktight manner.

11. Assembly known as a capsule made up of an ultrasonic measurement cell (1) and of an adapter (6) according to one of the preceding claims, in an assembled state.

12. Assembly according to Claim 11, the adapter being according to one of Claims 8 to 10, wherein the section of said inlet orifice (1E) and the section of said outlet pipe (3B) are oblong.

13. Assembly according to either of Claims 11 and 12, wherein said inlet pipe (3A) is connected to the inlet of said measurement channel (1A) via the first bent tubular channel (6A) and an intake channel (1H) disposed at one end of said measurement channel (1A) and said outlet pipe (3B) is connected to the outlet of said measurement channel (1A) via the second bent tubular channel (6B) and a delivery channel (11) disposed at the other end of said measurement channel (1A).

14. Assembly according to one of Claims 11 to 13, wherein said measurement cell (1) has an emitting and receiving ultrasonic sensor (1B) at each of the ends of said measurement channel (1A).

15. Assembly according to one of Claims 11 to 14, wherein said measurement channel (1A) is rectilinear.
